Europäisches Patentamt

European Patent Office

Office européen des brevets

(19)

(11) Numéro de publication: **0 107 869**

**A1**

(12)

# DEMANDE DE BREVET EUROPEEN

(21) Numéro de dépôt: 83201292.6

(22) Date de dépôt: 07.09.83

(51) Int. Cl.³: **G 09 G 1/20**
**A 63 F 9/22**

(30) Priorité: 14.09.82 FR 8215532

(43) Date de publication de la demande:
09.05.84 Bulletin 84/19

(84) Etats contractants désignés:
DE FR GB

(71) Demandeur: LA RADIOTECHNIQUE, Société Anonyme dite:
51, rue Carnot BP 301
F-92156 Suresnes Cedex(FR)

(84) Etats contractants désignés:
FR

(71) Demandeur: N.V. Philips' Gloeilampenfabrieken
Groenewoudseweg 1
NL-5621 BA Eindhoven(NL)

(84) Etats contractants désignés:
DE GB

(72) Inventeur: Bottiau, Michel
209 rue de l'Université
F-75007 Paris(FR)

(74) Mandataire: Pinchon, Pierre et al,
Société Civile S.P.I.D. 209 rue de L'Université
F-75007 Paris(FR)

(54) Système générateur de signaux vidéo trichromes, tel qu'un jeu, et cartouche amovible destinée à un tel système.

(57) Système générateur de signaux comportant une cartouche (1) de mémoire, des moyens de commande manuelle (2), un microprocesseur de gestion (3), un générateur d'image synthétique principal (4) délivrant par valeurs quantifiées des signaux de couleur R, V, B, et des signaux de synchronisation S définissant une image principale.

Au générateur principal (4), est adjoint un générateur additionnel (6) synchronisé par S et délivrant des signaux $R_1$, $V_1$, $B_1$ constituant une image additionnelle synchrone à l'image principale.

Des portions de l'image principale sont remplacées par les portions complémentaires de l'image additionnelle au moyen d'un dispositif de sélection (19) lorsque les portions de l'image principale ont une couleur identique à celle qui est mémorisée dans une registre (7).

Application à la génération d'images synthétiques complexes, notamment à des jeux vidéo améliorés.

FIG.1

"SYSTEME GENERATEUR DE SIGNAUX VIDEO TRICHROMES, TEL QU'UN JEU,
ET CARTOUCHE AMOVIBLE DESTINEE A UN TEL SYSTEME"

La présente invention concerne un système générateur de signaux vidéo trichromes, tel qu'un jeu vidéo, comportant notamment une source d'informations numériques mémorisées, des moyens de commande manuelle, un dispositif de gestion des informations issues des moyens précités, et un générateur d'image synthétique délivrant par valeurs quantifiées des signaux de couleur R, V, B ainsi que des signaux de synchronisation trame et ligne, ces signaux étant destinés à constituer une image sur un écran à partir des informations transmises par le dispositif de gestion.

L'invention vise plus particulièrement, mais non exclusivement, les jeux dits "vidéo" conçus pour être branchés sur un téléviseur couleur, soit sur la prise antenne, soit sur l'entrée vidéo-composite de la prise spéciale dite "prise péritélévision" équipant certains téléviseurs récents.

L'invention vise également un jeu vidéo comportant son propre écran de visualisation, et plus généralement tout système générateur d'image dont les composantes de couleur R, V, B sont produites par niveaux quantifiés et dont la structure répond à la définition indiquée en préambule.

L'invention concerne également une cartouche amovible destinée à constituer ladite source d'informations numériques au sein d'un système générateur de signaux vidéo. On sait que les jeux vidéo actuellement disponibles sur le marché sont organisés selon la structure indiquée, basée sur l'utilisation d'un générateur d'image synthétique, spécialisé pour cet usage, et qui délivre les signaux nécessaires pour constituer une image dont les portions mobiles ou statiques font partie de sous-ensembles d'image organisés selon un ordre hiérarchique de possibilités fonctionnelles. C'est ainsi, par exemple, qu'un sous-ensemble d'image sera réservé à des figures statiques ou quasi statiques (teinte de fond, limites fixes d'un terrain de jeu) alors qu'au moins un autre sous-ensemble d'image sera capable de présenter des figures déplaçables sur l'écran, de détecter des collisions entre figures, etc...

En conséquence, ce générateur d'image synthétique hautement spécialisé est, en définitive, un élément fort complexe par la nature des fonctions qu'il doit remplir. Aussi, s'est-on limité jusqu'à présent, et notamment pour des raisons économiques, à représenter sur l'écran, des images dont la composition est très simplifiée et ne présente, en fait, que des figures fonctionnelles se déplaçant sur un décor assez rudimentaire.

De telles images ont un attrait auprès de l'utilisateur qui laisse à désirer, notamment dans la mesure où elles s'écartent des spectacles naturels.

La présente invention propose un système générateur de signaux vidéo trichromes amélioré, notamment un jeu vidéo, capable de fournir des images dont la composition est enrichie principalement en ce qui concerne le décor, le système générateur selon l'invention étant conçu, en outre, pour être compatible avec les systèmes de l'art antérieur dont il est une version améliorée.

En effet, selon la présente invention, un système générateur de signaux vidéo trichromes, tel qu'un jeu vidéo comportant notamment une source d'informations numériques mémorisées, des moyens de commande manuelle, un dispositif de gestion des informations issues des moyens précités, et un générateur d'image synthétique délivrant par valeurs quantifiées des signaux de couleur R, V, B ainsi que des signaux de synchronisation trame et ligne, ces signaux étant destinés à constituer une image sur un écran à partir des informations transmises par le dispositif de gestion, est notamment remarquable en ce que, audit générateur d'image synthétique constituant le générateur principal, est adjoint un générateur additionnel d'image synthétique synchronisé au générateur principal et délivrant des signaux $R_1$, $V_1$, $B_1$ pour la consti-

tution d'une image additionnelle, synchrone en tous points à l'image constituée par le générateur principal, ledit système comportant en outre un registre de mémoire servant à mémoriser au moins une couleur déterminée parmi les combinaisons possibles des signaux R, V, B, un dispositif de sélection composé d'un jeu de portes de sélection entre l'ensemble des signaux R, V, B, et l'ensemble des signaux $R_1$, $V_1$, $B_1$, jeu de porte qui est commandé par un comparateur dont une première entrée est munie d'un décodeur des signaux R, V, B, et dont, à la deuxième entrée, est appliqué le signal issu du registre de mémoire de sorte que le jeu de portes de sélection substitue, à un point de l'image principale défini par R, V, B, un point de l'image additionnelle défini par $R_1$, $V_1$, $B_1$, dans le cas où il y a identité entre ladite couleur déterminée et la couleur définie à cet instant par l'ensemble des signaux R, V, B, aux entrées du comparateur.

Ainsi, le système générateur de signaux vidéo selon l'invention comporte deux générateurs d'image synthétique délivrant chacun, à tout instant et de manière synchrone, les signaux nécessaires à la constitution de deux images : une image principale comportant par exemple les figures fonctionnelles connues de l'art antérieur, et une image additionnelle qui constitue par exemple un décor d'arrière-plan dont la composition peut être aussi détaillée qu'on le désire. Il suffit, pour cela, de choisir un type de générateur additionnel d'image synthétique dont les possibilités soient en rapport avec l'objectif à atteindre. Une première caractéristique du système selon l'invention est de pouvoir différencier les caractéristiques fonctionnelles des images fournies par les générateurs d'image principal et additionnel en réservant par exemple au générateur principal le soin de fournir les figures déplaçables, tandis que le générateur additionnel ne fournira que des figures statiques ou quasi statiques (c'est-à-dire qui ne sont pas doués de possibilités de déplacement fins mais peuvent disparaître instantanément et réapparaître sous une autre forme), l'image additionnelle pouvant, par contre, être définie avec un plus grand nombre de couleurs et/ou avec des contours plus détaillés. Il s'ensuit l'avantage de pouvoir proportionner au résultat visuel recherché la complexité du générateur additionnel d'image synthétique qui peut être un dispositif non spécialisé et donc peu onéreux.

Conformément à l'invention, les signaux vidéo délivrés par le système résultent d'une combinaison d'éléments d'image dont les uns proviennent du générateur d'image principal et les autres proviennent du générateur d'image additionnel, ce dernier cas se produisant lorsqu'il y a identité, à un instant donné, entre la couleur définie par les signaux R, V, B délivrés par le générateur d'image principal, et une couleur déterminée, choisie à volonté, qui a été mémorisée sous forme numérique dans le registre de mémoire.

Le problème général consistant à découper dans une image d'arrière-plan des fenêtres dans lesquelles on incorpore des éléments d'une autre image a déjà été étudié, et des techniques basées sur l'analyse des couleurs de l'une des images et la reconnaissance d'une certaine teinte de cette image, pour la définition du contour de la fenêtre à découper sont déjà connues. Il faut observer cependant que le système selon l'invention appartient à une catégorie d'appareils mettant en jeu des moyens techniques considérablement plus réduits que la catégorie d'appareils de studio destinés à opérer sur des images naturelles à propos desquelles les techniques connues ont été mises en oeuvre.

En premier lieu, il faut noter que le système générateur de signaux dont il s'agit ici, génère des signaux R, V, B par valeurs quantifiées et que, par conséquent, le nombre de couleurs issues de la combinaison de ces signaux est très limité. Le fait que ces couleurs soient définies par valeurs numériques permet d'utiliser la solution particulièrement simplifiée de l'invention pour la sélection des éléments de l'image additionnelle, solution qui se réduit essentiellement à l'utilisation d'un registre de mémoire, d'un comparateur et d'un jeu de portes. En second lieu, le système selon l'invention offre, sans adjonction d'aucun circuit supplémentaire, de désigner plus qu'une seule couleur des éléments de l'image principale qui sera considérée comme transparente lors du fonctionnement, c'est-à-dire qui autorisera le passage de portions correspondantes de l'image additionnelle. Il suffit simplement de charger dans le registre de mémoire autant de couleurs qui devront se comporter comme "transparentes" au cours du fonctionnement.

Un autre avantage du système selon l'invention est qu'il permet des combinaisons très variées entre les éléments des deux images, combinaisons qui peuvent évoluer au cours du fonctionnement puisque, par un simple changement du contenu du registre de mémoire, on peut modifier la ou les couleurs désignées comme "transparentes". A ce propos, et à titre d'exemple, on peut citer le cas d'une figure de l'image additionnelle qui se trouverait masquée par une autre figure de l'image principale du fait que la couleur de cette autre figure n'était pas sélectionnée comme une couleur "transparente" alors qu'à l'instant suivant, la figure de l'image additionnelle apparaît du seul fait que la désignation de la couleur "transparente" au sein du registre de mémoire vient d'être modifiée.

D'autres avantages importants du système selon l'invention découlent du fait qu'il assure une compatibilité optimale avec les systèmes et éléments de systèmes de l'art antérieur. En effet, en prenant l'exemple des jeux vidéo, il est possible de réserver au générateur d'image synthétique principal les parties d'image déterminantes pour la compréhension du jeu alors que le générateur additionnel d'image synthétique ne fournit que des éléments complémentaires de décor. On peut alors facilement assurer que le nouveau système selon l'invention puisse fonctionner à partir des sources d'informations numériques (cartouches de mémoire programmable) de l'art antérieur, qui produiront des images dépourvues du décor additionnel. Par ailleurs, la part essentielle du logiciel en rapport avec les images telles que fournies par les systèmes de l'art antérieur peut être réutilisée sans changements.

Selon un mode préféré de mise en oeuvre de l'invention, le système générateur de signaux est remarquable en ce que le générateur additionnel d'image synthétique comporte au moins une mémoire vive additionnelle dans laquelle peuvent être chargées, par l'intermédiaire dudit dispositif de gestion, les informations numériques définissant la composition de l'image additionnelle à partir de ladite source d'informations numériques.

Si l'on fait en sorte que ladite mémoire vive soit chargée dans un premier temps, durant la suite du fonctionnement, on peut prévoir que le système n'ait plus qu'à gérer les informations relatives au générateur d'image synthétique principal. Il est alors très simple de rendre le système selon l'invention compatible avec les sources d'informations (cartouches de jeu) de l'art antérieur. Bien entendu, dans ce cas, les informations destinées au générateur additionnel étant absentes dans ce type de source, le nouveau système fonctionnera comme celui de l'art antérieur et procurera les mêmes images.

Selon une variante complémentaire de l'invention, le dispositif de sélection comporte une entrée de validation qui autorise ou non la sélection entre l'ensemble des signaux R, V, B et l'ensemble des signaux $R_1$ $V_1$ $B_1$, laquelle entrée de validation est reliée à une borne de validation portée par ladite source d'informations numériques.

La présente invention concerne également une cartouche amovible destinée à constituer la source d'informations numériques dans le système précédemment défini, remarquable en ce qu'une partie des informations numériques qu'elle contient est destinée à être transférée dans la mémoire vive additionnelle associée au générateur additionnel d'image synthétique.

Elle offre l'avantage que les informations numériques destinées au générateur additionnel d'image synthétique peuvent être modifiées d'une cartouche à l'autre, de manière à ce que l'image additionnelle soit adaptée à volonté à l'image principale fournie par les informations contenues dans la même cartouche.

Avantageusement, lesdites informations numériques qu'elle contient comportent, en outre, le mot numérique définissant ladite couleur déterminée (lesdites couleurs déterminées), mot destiné à être transféré dans le registre de mémoire. Ainsi, toutes les informations numériques spécifiques d'une séquence de fonctionnement, un jeu par exemple, sont centralisées dans la cartouche et constituent un ensemble de données fonctionnellement homogènes qui peuvent être adaptées à la séquence envisagée.

Dans une variante complémentaire de l'invention, la cartouche amovible comporte avantageusement une borne de validation dont un niveau de tension déterminé lors du fonctionnement est indicatif du fait que, parmi les informations numériques contenues dans la source, une partie de ces informations est destinée à être transférée dans la mémoire vive additionnelle associée au générateur additionnel d'image synthétique.

D'autres particularités, détails et avantages ressortiront plus clairement de la description ci-après, en référence aux dessins annexés, le tout donné à titre d'exemple non limitatif.

La figure 1 représente un schéma synoptique général d'un système générateur de signaux conforme à l'invention.

La figure 2 représente un schéma synoptique plus détaillé de la partie du système qui concerne les générateurs d'image synthétique principal et additionnel.

La figure 3 décrit un exemple détaillé de réalisation de la partie du système de la figure 1 qui concerne le comparateur et le registre de mémoire.

La figure 4 montre un exemple de réalisation du jeu de porte de sélection.

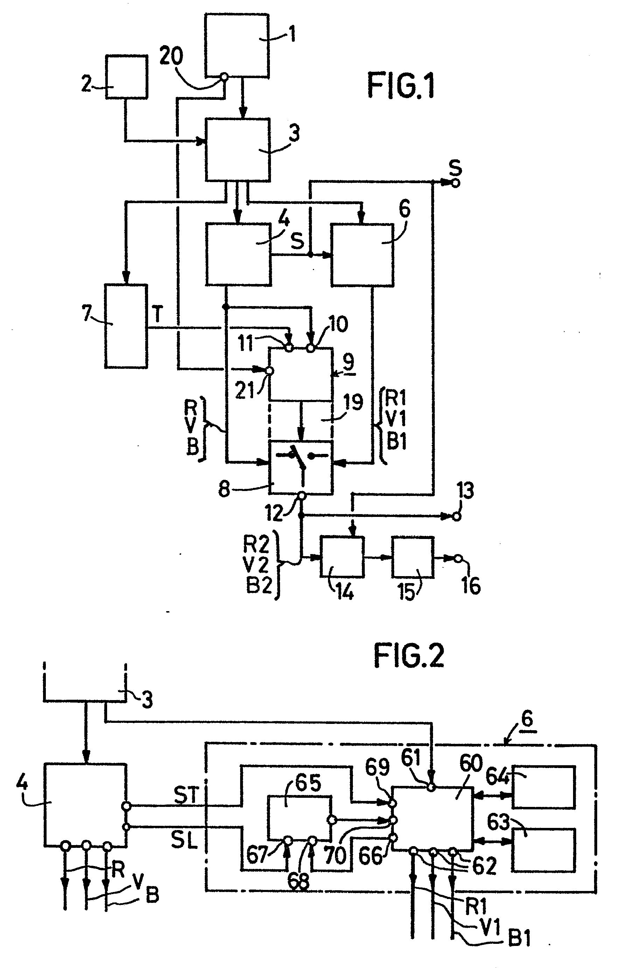

Conformément à la figure 1, le système se compose essentiellement d'une source 1 d'informations numériques mémorisées par exemple dans une mémoire programmable, de moyens de commande manuelle 2 qui, pour un jeu, seront constitués par un clavier et des leviers multidirectionnels de commande mis à la disposition des joueurs, un dispositif de gestion 3

0107869

des informations issues notamment de la source 1 et des moyens de commande manuelle 2, dispositif 3 qui, en pratique, est un microprocesseur. Le système comporte encore un générateur d'image synthétique principal 4 disponible actuellement sous forme de circuit intégré conçu spécifiquement pour être incorporé dans un jeu vidéo. Le générateur principal d'image 4 génère des signaux S de synchronisation trame et ligne ainsi que trois signaux de couleurs fondamentales R, V, B, l'ensemble de ces signaux pouvant être utilisés pour former sur un écran une image appelée ci-après image principale. L'utilisation de ces signaux peut être directe lorsque cet écran fait partie du système lui-même, ou lorsqu'on utilise un téléviseur muni d'une prise adéquate (prise péritélévision), soit, elle peut se faire par l'intermédiaire d'un modulateur UHF ou VHF précédé des circuits de matriçage et de codage nécessaires, lorsqu'on désire se connecter à la prise d'antenne d'un téléviseur.

La partie décrite jusqu'ici concerne également les systèmes connus de l'art antérieur. A l'heure actuelle, des jeux vidéo répondant à cette structure sont largement répandus dans le public ; il n'est donc pas nécessaire d'en décrire plus amplement les détails qui sont bien connus des spécialistes.

Le système générateur de signaux de la figure 1 comporte, en outre, un générateur additionnel d'image synthétique 6 délivrant des signaux $R_1$, $V_1$, $B_1$ pour la constitution d'une image additionnelle, synchrone en tous points à l'image principale. Dans ce but, le générateur additionnel 6 est synchronisé sur le générateur principal 4 à partir des signaux S de synchronisation.

Le système comporte encore un registre de mémoire 7 servant à mémoriser au moins une couleur déterminée parmi les combinaisons possibles des signaux R, V, B. L'information numérique correspondante est transmise par le dispositif de gestion 3 au début d'un cycle de fonctionnement mais, comme il a déjà été mentionné, cette information numérique peut subir des modifications pendant la durée de fonctionnement en liaison avec un évènement déterminé.

On observe encore à la figure 1 un jeu de portes 8 qui assure la sélection entre l'ensemble des signaux R, V, B issus du générateur d'image synthétique principal 4 et l'ensemble des signaux $R_1$, $V_1$, $B_1$ issus du générateur d'image synthétique additionnel 6. Le jeu de portes 8 est commandé par un comparateur 9 dont l'entrée 10 est munie d'un décodeur des signaux R, V, B qui y sont appliqués tandis que, sur l'autre entrée 11 du comparateur 9, est appliqué le signal représentatif T de la couleur déterminée (ou des couleurs déterminées) issu du régistre de mémoire 7. L'ensemble du jeu de portes 8 et du comparateur 9 constitue le dispositif de sélection 19.

Le système générateur de signaux vidéo de la figure 1 fonctionne de telle sorte qu'un point de l'image principale, défini par R, V, B, est remplacé par un point de l'image additionnelle défini par $R_1$, $V_1$, $B_1$ à chaque fois qu'il y a identité entre le signal T, représentatif de ladite couleur déterminée, et la couleur de l'image principale à cet instant définie par l'ensemble des signaux R, V, B. Le jeu de portes 8 réalise cette substitution en réponse au signal de commande provenant du comparateur 9. A la sortie 12 du jeu de portes 8, sont alors produits des signaux $R_2$, $V_2$, $B_2$ destinés à constituer une image finale, composite, dans laquelle des parties d'image fournies par le générateur d'image principal 4 sont remplacées par des parties correspondantes de l'image additionnelle dès lors que l'on aura assigné à ces parties de l'image principale une couleur dite "transparente" et que l'on aura mémorisé dans le régistre de mémoire 7, la même couleur "transparente".

Les signaux $R_2$, $V_2$, $B_2$ peuvent être prélevés à la sortie 13 du système pour utilisation directe en combinaison avec les signaux de synchronisation S. On peut également les appliquer à des circuits de matriçage et de codage couleur 14 suivis d'un modulateur 15 UHF (ou VHF) de sorte que la sortie 16 peut être connectée à la prise d'antenne d'un téléviseur.

Comme indiqué schématiquement à la figure 1, la source 1 d'informations numériques comporte avantageusement une borne de validation 20 reliée à une entrée de validation 21 du comparateur 9. Lors du fonctionnement, apparaît à la borne 20 un niveau de tension qui est appliqué en tant que condition supplémentaire à l'entrée 21 du comparateur 9. Celui-ci ne fournit alors un signal de commande au jeu de portes 8, pour la sélection des signaux $R_1$, $V_1$, $B_1$, que si cette condition supplémentaire est réalisée. Ce niveau de tension apparaissant à la borne 20 de la source 1 est l'indication que, parmi les informations numériques contenues dans la source 1, une partie de ces informations est destinée à être transférée dans une mémoire vive additionnelle associée au générateur additionnel d'image 6. Le système, en effet, pourrait être utilisé également avec des sources d'informations numériques de l'art antérieur, qui ne comportent que des informations destinées au générateur principal 4, le générateur additionnel 6 restant inactif dans cette hypothèse. La borne de validation 20, alors, ne délivrerait pas de tension (ou pourrait même omettre cette borne sur une source de ce type) de sorte que le jeu de portes 8 se trouverait forcé dans sa position qui ne transmet que les signaux R, V, B. On assure ainsi une parfaite sécurité de fonctionnement du système dans le cas où on l'utilise avec une source d'informations de l'art antérieur.

La figure 2 développe sous forme synoptique plus détaillée les fonctions du générateur additionnel d'image synthétique 6 de la figure 1 en relation avec le générateur principal 4. Le générateur additionnel d'image 6 comporte un processeur spécialisé 60 recevant sur sa borne 61 les données provenant du dispositif de gestion 3 et délivrant à ses trois sorties 62 les signaux $R_1$, $V_1$ et $B_1$.

Le processeur 60, dans l'exemple décrit, fournit des signaux de caractères graphiques répartis sur l'écran en vingt-cinq rangées de quarante caractères. Il contient ses propres mémoires mortes programmées pour obtenir des caractères graphiques standard, notamment des symboles alphanumériques tels que ceux utilisés pour la visualisation de vidéotextes, le processeur 60 utilisé ayant été conçu en vue de cette application. On a figuré une première mémoire vive 63, dite mémoire de page, associée au processeur 60, dans laquelle on inscrit les adresses auxquelles le processeur 60 doit se référer pour obtenir la constitution de l'image additionnelle décomposée en caractères graphiques. Ceux-ci sont définis par un octet d'identification caractère et un octet d'attribut (couleur du caractère, couleur du fond, etc...). Une seconde mémoire vive 64 comporte avantageusement la définition, sous forme numérique, de caractères spéciaux définis point par point en fonction des caractéristiques de l'image additionnelle désirée. Ces caractères spéciaux sont également générés sous forme de signaux $R_1$, $V_1$, $B_1$ aux bornes de sortie 62 du processeur 60. Le chargement des mémoires 63 et 64 se fait à partir des données contenues dans la source 1 et sont transmises par l'intermédiaire du dispositif de gestion 3.

Sur l'entrée 70 du processeur 60 sont appliqués les signaux d'une horloge à quartz fonctionnant à 3,5 MHz environ, dont la fréquence est ajustable au moyen d'une diode dont la capacité varie elle-même en réponse à une comparaison de phase. L'ensemble de ces circuits est désigné par le dispositif 65 qui comporte donc également un comparateur de phase sur ses entrées 67 et 68.

Un signal à fréquence de ligne, issu du processeur 60 par la borne 66, est comparé avec le signal de synchronisation ligne SL issu du générateur d'image principal 4, ces signaux étant respectivement appliqués aux bornes 68 et 67. Le déphasage analysé par le dispositif 65 est converti en une tension appliquée à la diode à capacité variable, de sorte que le signal à fréquence de ligne issu de la borne 66 est asservi en moyenne à la fréquence du signal SL. Ce type de montage dit "PLL" est bien connu des spécialistes de sorte qu'une description plus détaillée n'est pas nécessaire. Le processeur 60 comporte encore une entrée 69 de synchronisation de trame à laquelle est appliqué le signal ST de synchronisation de trame issu du générateur d'image principal 4. Ainsi, les signaux $R_1$, $V_1$, $B_1$ produits par le générateur additionnel d'image 6 sont-ils parfaitement synchronisés (trame et ligne) avec ceux produits par le générateur principal 4 qui impose sa propre fréquence. Signalons enfin qu'un générateur tel que celui qui vient d'être décrit à titre d'exemple, faisant office de générateur additionnel d'image synthétique 6, peut être constitué à partir de circuits disponibles sur le marché, notamment des circuits intégrés portant les références commerciales EF 9340 et EF 9341 de la Société française EFCIS.

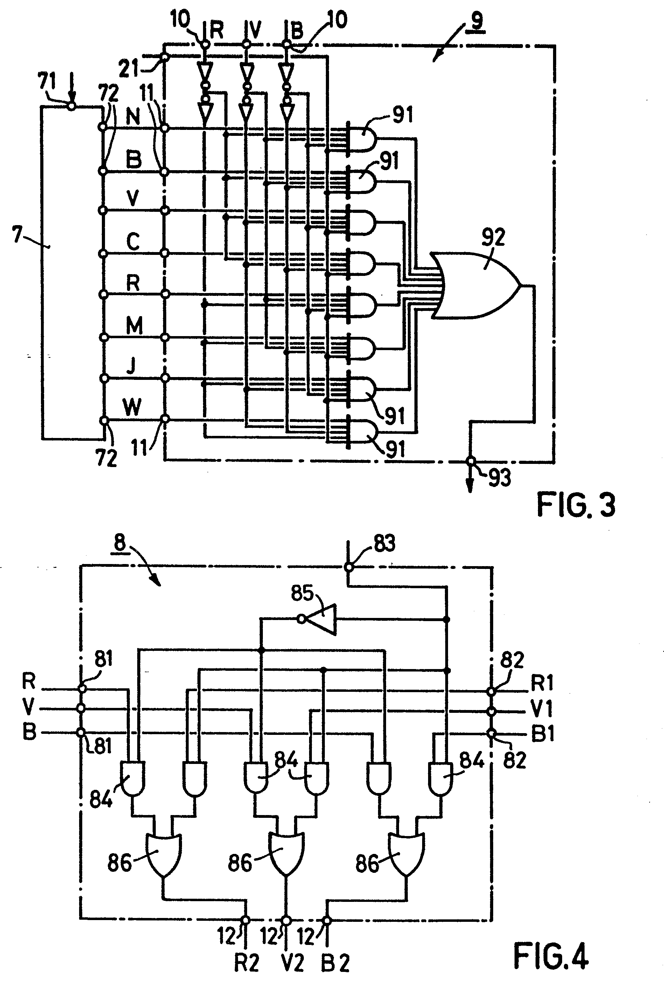

La figure 3 illustre un exemple de réalisation du comparateur 9 de la figure 1 à partir d'un multiplexeur à huit entrées, plus trois entrées de sélection et une entrée de validation.

Le registre de mémoire 7 est chargé par son entrée 71 avec un mot numérique qui fait apparaître sur les sorties 72 chaque couleur dite "transparente" à un état haut. Dans notre exemple, les couleurs possibles sont : noir (N), bleu (B), vert (V), cyan (C), rouge (R), magenta (M), jaune (J), blanc (W), résultant des combinaisons possibles entre R, V et B à deux états chacun.

Chacune des sorties 72 du registre de mémoire 7 est connectée à l'entrée correspondante 11 du comparateur. Ce dernier comprend, par ailleurs, trois entrées 10 pour les signaux R, V et B, et l'entrée de validation 21. Les signaux présents sous forme parallèle aux entrées 10 sont ensuite décodés par câblage vers les entrées de huit portes "ET" 91. Ainsi, lorsqu'il y a identité entre la couleur portant un état haut à l'une des entrées 11 et la couleur définie à cet instant par l'ensemble des signaux R, V, B qui portent un état haut aux entrées 10, une des portes 91 délivre un état haut qui est transmis par la porte "OU" 92 reliée à la sortie 93 du comparateur 9. A cette sortie 93, apparaît donc un signal à l'état haut qui autorise par le jeu de portes 8 la sélection des signaux $R_1$, $V_1$, $B_1$. De plus, le signal à l'état haut sur la sortie 93 n'est délivré qu'à la condition qu'un signal à l'état haut soit également présent à l'entrée de validation 21, cette entrée étant reliée à la borne 20 de la source 1 d'informations numériques comme cela a déjà été exposé à propos de la figure 1.

La figure 4 illustre un exemple de réalisation du jeu de portes 8. Il comporte d'une part les entrées 81 pour les signaux R, V, B, d'autre part les entrées 82 pour les signaux $R_1$, $V_1$, $B_1$, et l'entrée 83 de commande reliée à la sortie 93 du comparateur 9 (voir figure 3). Les entrées 81 et 82 sont connectées à une première entrée de chacune des six portes "ET" 84, tandis que le signal de commande de sélection est appliqué d'une part directement sur la deuxième entrée de trois parmi les six portes 84 et, d'autre part, à travers un inverseur 85 sur la deuxième entrée des trois autres portes 84. Les sorties des portes 84 sont connectées, deux à deux, à des portes "OU" 86 qui délivrent sur les sorties 12 les signaux $R_2$, $V_2$, $B_2$ résultant des signaux R, V, B auxquels on a substitué les signaux $R_1$, $V_1$, $B_1$ pour certaines portions de l'image principale en réponse au signal de commande fourni sur l'entrée 83.

Bien entendu, l'exemple décrit jusqu'ici a été donné à titre d'illustration et de nombreuses variantes peuvent être imaginées, notamment quant au nombre de couleurs utilisées et aux moyens à mettre en oeuvre pour réaliser l'invention. C'est ainsi qu'un signal de luminance à deux états, superposé aux signaux R, V, B et/ou aux signaux $R_1$, $V_1$, $B_1$, peut être prévu sans difficultés pour enrichir la composition de l'image finale. Lorsque ce signal de luminance fait partie de la définition de l'image principale, il est simple de le faire intervenir également dans la définition des couleurs dites "transparentes", si on le désire, en ajoutant une voie numérique au registre de mémoire 7, au comparateur 9 et au jeu de portes 8.

Par ailleurs, l'entrée de validation 21 du comparateur 9 aurait pu, de manière équivalente, être remplacée par une porte de validation interposée entre la sortie 93 du comparateur et l'entrée 83 du jeu de portes de sélection 8. On peut remarquer que le changement d'état du dispositif de sélection 19 se produit avec un bref retard par rapport au front de variation de R, V, B qui a entraîné le changement. Ce retard provient du délai de propagation des signaux dans les portes successives que contient le dispositif de sélection 19.

Bien que la Demanderesse ait observé que ce retard était suffisamment faible pour que ses effets soient invisibles sur l'écran, il est aisé de le compenser en interposant aux entrées 81 et 82 du jeu de portes 8, (figure 4), des éléments logiques supplémentaires (série d'inverseurs par exemple) destinés à soumettre les signaux incidents R, V, B et $R_1$, $V_1$, $B_1$ à un retard équivalent à celui apporté par le dispositif de sélection 19.

Dans le cas d'un jeu vidéo, la source 1 d'informations numériques est une cartouche amovible qui est constituée essentiellement d'une mémoire morte. Cette cartouche peut être prévue compatible avec les cartouches de l'art antérieur et également avec les systèmes de l'art antérieur. Dans le premier cas, une cartouche de jeu de l'art antérieur incorporée au système selon l'invention fournira les images à partir du seul générateur d'image principal 4. Le générateur additionnel d'image 6 restera inactif. Outre que le registre de mémoire 7 n'est pas chargé dans ce cas, la borne de validation 20 ne délivre aucune tension et le dispositif de sélection 19 reste bloqué. Le système délivre uniquement les signaux R, V, B. Dans le deuxième cas, où une cartouche conforme à l'invention est incorporée à un système de l'art antérieur (qui ne comporte pas de générateur additionnel d'image), les informations numériques destinées à être transférées dans la mémoire vive additionnelle associée au générateur additionnel ne sont pas prises en compte, et ce système délivrera les seules images principales définies par R, V, B. On obtient donc, selon l'invention, une très grande souplesse d'adaptation vis-à-vis des systèmes de l'art antérieur.

Par ailleurs, les moyens mis en oeuvre pour réaliser l'invention sont relativement peu complexes de sorte que cette mise en oeuvre peut être obtenue pour un prix modéré.

## - REVENDICATIONS -

1. Système générateur de signaux vidéo trichromes, tel qu'un jeu vidéo, comportant notamment une source (1) d'informations numériques mémorisées, des moyens de commande manuelle (2), un dispositif de gestion (3) des informations issues des moyens précités, et un générateur d'image synthétique (4) délivrant par valeurs quantifiées des signaux de couleur R, V, B ainsi que des signaux de synchronisation (S) trame et ligne, ces signaux étant destinés à constituer une image sur un écran à partir des informations transmises par le dispositif de gestion (3), caractérisé en ce que, audit générateur d'image synthétique constituant le générateur principal (4), est adjoint un générateur additionnel d'image synthétique (6) synchronisé au générateur principal (4) et délivrant des signaux $R_1$, $V_1$, $B_1$ pour la constitution d'une image additionnelle, synchrone en tous points à l'image constituée par le générateur principal (4), ledit système comportant, en outre, un registre de mémoire (7) servant à mémoriser au moins une couleur déterminée parmi les combinaisons possibles des signaux R, V, B, un dispositif de sélection (19) composé d'un jeu de portes (8) de sélection entre l'ensemble des signaux R, V, B, et l'ensemble des signaux $R_1$, $V_1$, $B_1$, jeu de portes qui est commandé par un comparateur (9) dont une première entrée (10) est munie d'un décodeur des signaux R, V, B, et dont, à la deuxième entrée (11), est appliqué le signal (T) issu du registre de mémoire (7) de sorte que le jeu de portes (8) de sélection substitue, à un point de l'image principale défini par R, V, B, un point de l'image additionnelle défini par $R_1$, $V_1$, $B_1$ dans le cas où il y a identité entre ladite couleur déterminée et la couleur définie à cet instant par l'ensemble des signaux R, V, B, aux entrées du comparateur (9).

2. Système selon la revendication 1, caractérisé en ce que le générateur additionnel d'image synthétique (6) comporte au moins une mémoire vive (63)(64) additionnelle dans laquelle peuvent être chargées, par l'intermédiaire dudit dispositif de gestion, les informations numériques définissant la composition de l'image additionnelle à partir de ladite source (1) d'informations numériques.

3. Système selon l'une des revendications 1 et 2, caractérisé en ce que le dispositif de sélection (19) comporte une entrée de validation (21) qui autorise ou non la sélection entre l'ensemble des signaux R, V, B et l'ensemble des signaux $R_1$, $V_1$, $B_1$, laquelle entrée de validation (21) est reliée à une borne de validation (20) portée par ladite source (1) d'informations numériques.

4. Cartouche amovible destinée à constituer ladite source (1) d'informations numériques dans un système conforme à l'une des revendications 2 et 3, caractérisée en ce qu'une partie des informations numériques qu'elle contient est destinée à être transférée dans la mémoire vive additionnelle (63)(64) associée au générateur additionnel d'image synthétique (6).

5. Cartouche amovible selon la revendication 4, caractérisée en ce que lesdites informations numériques qu'elle contient comportent, en outre, le mot numérique définissant ladite couleur déterminée (lesdites couleurs déterminées), mot destiné à être transféré dans le registre de mémoire (7).

6. Cartouche amovible selon l'une des revendications 4 ou 5 destinée à constituer ladite source (1) d'informations numériques au sein d'un système générateur de signaux vidéo selon la revendication 3, caractérisée en ce qu'elle comporte une borne de validation (20), dont un niveau de tension déterminé lors du fonctionnement est indicatif du fait que, parmi les informations numériques contenues dans la source (1), une partie de ces informations est destinée à être transférée dans la mémoire vive additionnelle (63) (64) associée au générateur additionnel d'image synthétique (6).

0107869

1/2

FIG.1

FIG.2

1-II-PHF 82-570

0107869

FIG. 3

FIG. 4

2-II-PHF 82-570

0107869

Office européen
des brevets

**RAPPORT DE RECHERCHE EUROPEENNE**

Numéro de la demande

EP 83 20 1292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A,P | US-A-4 374 395 (TEXAS INSTRUMENTS INCORP.) * Colonne 2, ligne 7 - colonne 4, ligne 42 * & JP - A - 57 132 195 (Cat. A) | 1 | G 09 G 1/28 A 63 F 9/22 |
| | --- | | |
| A | US-A-4 149 184 (GIDDINGS) * Colonne 2, lignes 1-14 * | 1 | |
| | --- | | |
| A | GB-A-2 010 645 (ATARI) * Page 2, lignes 53-67 * | 1 | |
| | --- | | |
| A | GB-A-2 086 180 (ROBERT BOSCH) * Page 2, lignes 53-67 * | 1 | |
| | ----- | | |

| DOMAINES TECHNIQUES RECHERCHES (Int. Cl. ³) |
|---|
| G 09 G A 63 F H 04 N |

Le présent rapport de recherche a été établi pour toutes les revendications

| Lieu de la recherche | Date d'achèvement de la recherche | Examinateur |
|---|---|---|
| LA HAYE | 30-01-1984 | CRISTOL Y. |